# EUROPÄISCHE PATENTSCHRIFT

(11) **EP 1 128 888 B1**
(45) Veröffentlichungstag und Bekanntmachung des Hinweises auf die Patenterteilung: **09.04.2003**
(21) Anmeldenummer: 99944521.6
(22) Anmeldetag: 26.08.1999
(51) Int. Cl.: B01D 29/11

(54) **VERFAHREN ZUM HERSTELLEN EINER DICHTVERBINDUNG**
METHOD FOR PRODUCING A SEALING CONNECTION
PROCEDE POUR REALISER UN ASSEMBLAGE ETANCHE

(30) Priorität: 01.10.1998 DE 19845145
(43) Veröffentlichungstag der Anmeldung: 05.09.2001
(73) Patentinhaber: Hydac Process Technology GmbH, 66538 Neunkirchen (DE)
(72) Erfinder: WINTER, Martin, D-66620 Nonnweiler (DE); WNUK, Ralf, D-66450 Bexbach (DE); LANG, Norbert, D-66440 Blieskastel (DE); HAUSDORF, Jürgen, D-66130 Saarbrücken (DE)
(74) Vertreter: Patentanwälte Bartels und Partner
(86) Internationale Anmeldenummer: EP9906267
(87) Internationale Veröffentlichungsnummer: WO00020090

(56) Entgegenhaltungen:
- EP-A- 0 867 215
- GB-A- 1 003 164
- US-A- 5 605 555

## Beschreibung

Die Erfindung betrifft ein Verfahren zur Herstellen einer Dichtverbindung mit den Merkmalen des Oberbegriffes des Patentanspruches 1.

Bekannte Verfahren dieser Art kommen bevorzugt bei Filterelementen zur Anwendung, die zum Filtern schwer beherrschbarer Medien vorgesehen sind und wo Filtermatten aus Edelstahl verwendet werden. Bei den für derartige Filterelemente in Frage kommenden Medien handelt es sich um hochviskose und/oder aggressive Fluide mit oftmals sehr hohen Temperaturen, beispielsweise um Polymerschmelze, die gefiltert wird, um Spinndüsen zur Herstellung textilen Ausgangsmaterials zugeführt zu werden.

Zwar ermöglichen die bekannten Verfahren der eingangs genannten Art das Herstellen einer zufriedenstellenden Dichtverbindung zwischen Filtermatte und Kopfstück, das Verpressen der Außenwand der im Kopfstück ausgebildeten Nut mit der Filtermatte führt jedoch zu einer Einschnürung des betreffenden Umgangsbereiches des Filterelementes. Dieser Bereich verringerten Durchmessers bildet am Umfangsbereich des Filterelementes einen Totraum, in dem sich das zu filternde Medium ansammelt, wodurch es bei hochviskosen und/oder aufgeschmolzenen Medien zum thermischen Abbau des Materials kommt. Dies führt zu Betriebsstörungen und Betriebsunterbrechungen sowie zu Qualitätseinbußen am Produkt.

Durch die EP-A-0 867 215 A1 ist ein gattungsgemäßes Verfahren bekannt, bei dem ein rohrförmiges Faltenfilterelement mit an einem Ende einen Filterkörper ringförmig außen und innen umgreifenden, ein U-förmiges Profil aufweisenden Endstück aus elastischem Dichtmaterial versehen wird, wobei auf der Außenseite des Endstückes sich von der Stirnseite weg erstreckend eine Einschnürung angeordnet wird, welcher ein gerader oder kegelstumpfförmiger Bereich folgt. Hierdurch ist es möglich, die Endstücke eines Faltenfilterelementes so auszubilden, daß die Herstellung kostengünstig möglich ist und weiterhin ist eine Möglichkeit der Befestigung des Faltenfilterelementes an der Trägerstruktur geschaffen, die zugleich auch die Abdichtung für das Filterelement übernimmt. Trotz einer Verdickung in Form einer Materialanhäufung an der dem Umfang·benachbarten Wand der Ringnut, ist ein Totraum nicht vermieden, auch wenn bei der bekannten Lösung das dahingehende Merkmal in Verbindung mit einer Vergrößerung des Kopfstückdurchmessers einhergeht. Mithin kommt es auch hier zu den bereits beschriebenen Nachteilen während des Filtrationsbetriebes.

Der Erfindung liegt daher die Aufgabe zugrunde, ein Verfahren aufzuzeigen, das sowohl die Herstellung einer einwandfreien Dichtverbindung ermöglicht, als auch verbesserte Betriebseigenschaften des betreffenden Filterelementes gewährleistet.

Bei einem Verfahren der eingangs genannten Art ist diese Aufgabe erfindungsgemäß dadurch gelöst, daß
a) ein metallisches Kopfstück verwendet wird,
b) durch die Verdickung eine Vergrößerung des Durchmessers des Kopfstückes erhalten wird,
c) das Verpressen derart durchgeführt wird, daß eine umfängliche Einschnürung im Verbindungsbereich zwischen dem Kopfstück und der Filtermatte vermieden wird, und
d) durch das Verpressen eine Verpressung der Filtermatte bewirkt wird.

Dadurch wird erreicht, daß der Vorgang des Verpressens am Umfangsbereich des Kopfstückes nicht zu einer Einschnürung am betreffenden Umfangsbereich des Kopfstückes führt, weil das durch die Wandverdickung zur Verfügung gestellte "überschüssige" Materialvolumen, bei dem durch das Verpressen bewirkten Fließvorgang die Bildung der bei dem bekannten Verfahren erzeugten Einschnürung vermeidet, indem es den ansonsten gebildeten Totraum ausfüllt.

Vorteilhafterweise wird das Kopfstück mit einer solchen Ringnut versehen, die am Nutgrund eine größere lichte Weite als im vom Nutgrund entfernten Bereich besitzt, und die Verdickung wird in einem Abstand vom Nutgrund ausgebildet. Bei solcher Formgebung bildet der nicht verdickte Wandbereich am Umfang des Kopfstückes eine Art Biegegelenk, über das der verdickte Wandbereich der Ringnut mit dem übrigen Kopfstück zusammenhängt, so daß, auch bei einer verhältnismäßig voluminös ausgebildeten Verdickung, dank des unverdickten, ein Biegegelenk bildenden Wandbereiches eine Verformung der Verdickung nach innen in gewünschter Weise beim Verpressen ermöglicht ist.

Eine nach dem Verpressen gegebenenfalls verbliebene, durch die Verdickung gebildete Vergrößerung des Außendurchmessers des Kopfstückes kann nach dem Verpressen durch mechanisches Bearbeiten, bei dem der Umfang des Kopfstückes bis auf den Solldurchmesser abgetragen wird, wieder beseitigt werden. Vorzugsweise wird das Abtragen durch Überdrehen des Bereiches der Verdickung durchgeführt. Das Filterelement läßt sich auf diese Weise in seiner Außenkontur so gestalten, daß der Umfang des Kopfstückes ohne eine wesentliche, einen Totraum bildende Lücke, sich fluchtend an den Außendurchmesser des die Filtermatte an ihrer Außenseite ummantelnden Schutzkorbes anschließt.

Nachstehend ist die Erfindung anhand der Zeichnung im einzelnen erläutert.
Es zeigen:
- Fig. 1: eine abgebrochen und halbseitig im Längsschnitt gezeichnete Ansicht des dem Kopfstück benachbarten Bereiches eines nach dem Stand der Technik hergestellten Filterelementes;
- Fig. 2: eine entsprechend Fig. 1 ebenfalls abgebrochen und halbseitig geschnitten dargestellte Ansicht des dem Kopfstück benachbarten Bereiches eines für die Durchführung des erfindungsgemäßen Verfahrens vorgesehenen Filterelementes, vor dem Herstellen der Dichtverbindung zwischen Filtermatte und Kopfstück, und
- Fig. 3: eine der Fig. 2 entsprechende Ansicht, jedoch nach Herstellen der Dichtverbindung durch Durchführen des erfindungsgemäßen Verfahrens.

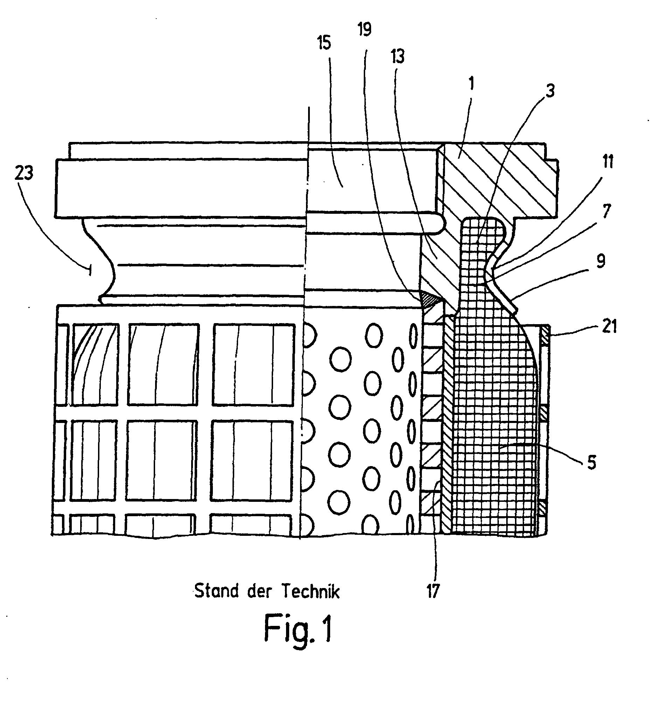

Die Fig. 1 zeigt den kopfseitigen Bereich eines rohrförmigen Filterelementes üblicher Art, bei dem die Dichtverbindung zwischen einem aus Edelstahl gefertigten Kopfstück 1 und dem oberen Rand 3 einer Filtermatte 5 durch ein Verfahren gemäß dem Stand der Technik herstellt ist. Der kopfseitige Rand 3 der ebenfalls aus Edelstahl gefertigten Filtermatte 5 ist im Kopfstück 1 in einer darin ausgebildeten, umfänglichen Ringnut 7 aufgenommen. Die die Ringnut 7 an der Außenseite begrenzende, dem Umfang benachbarte Wand 9 ist zur Bildung der Dichtverbindung zwischen Kopfstück 1 und Filtermatte 5 mittels Drückzangen oder einem Rollierwerkzeug radial nach innen eingepreßt, wodurch eine den Durchmesser des Kopfstückes 1 bereichsweise verringernde Einschnürung 11 gebildet wird. Die Falten der in üblicher Weise als Faltkörper ausgebildeten Filtermatte 5 werden im Bereich der Einschnürung 11 aneinander angelegt und gegen die die Ringnut 7 nach innen begrenzende Wand 13 des Kopfstückes 1 angepreßt, so daß die Dichtverbindung zustande kommt.

Das Kopfstück 1 des Filterelements weist in üblicher Art einen zentralen Durchgang 15 für das gefilterte Medium auf. Eine die Filtermatte 5 tragende und nach innen abstützende Stützrohranordnung 17 ist über eine Schweißverbindung 19 mit dem Innenrand des Durchganges 15 des Kopfstückes 1 verbunden. Ein die Filtermatte 5 außen umgebender Schutzkorb 21 bildet eine Abstützung der Filtermatte 5 nach außen, um, beispielsweise bei Rückspülvorgängen, ein Abheben der Filtermatte 5 von der Stützrohranordnung 17 zu verhindern.

Wie aus Fig. 1 deutlich zu ersehen ist, entsteht durch die Einschnürung 11 ein Umfangsbereich des Filterelementes mit verringertem Außendurchmesser, wodurch bei im Sitz einer zugehörigen Filtervorrichtung aufgenommenem Filterelement ein Totraum 23 entsteht, in dem sich während des Betriebes ein Fluidvolumen ansammelt und stagniert, was Klumpenbildung, Erstarrung von Schmelze und ähnliche störende Effekte zur Folge hat.

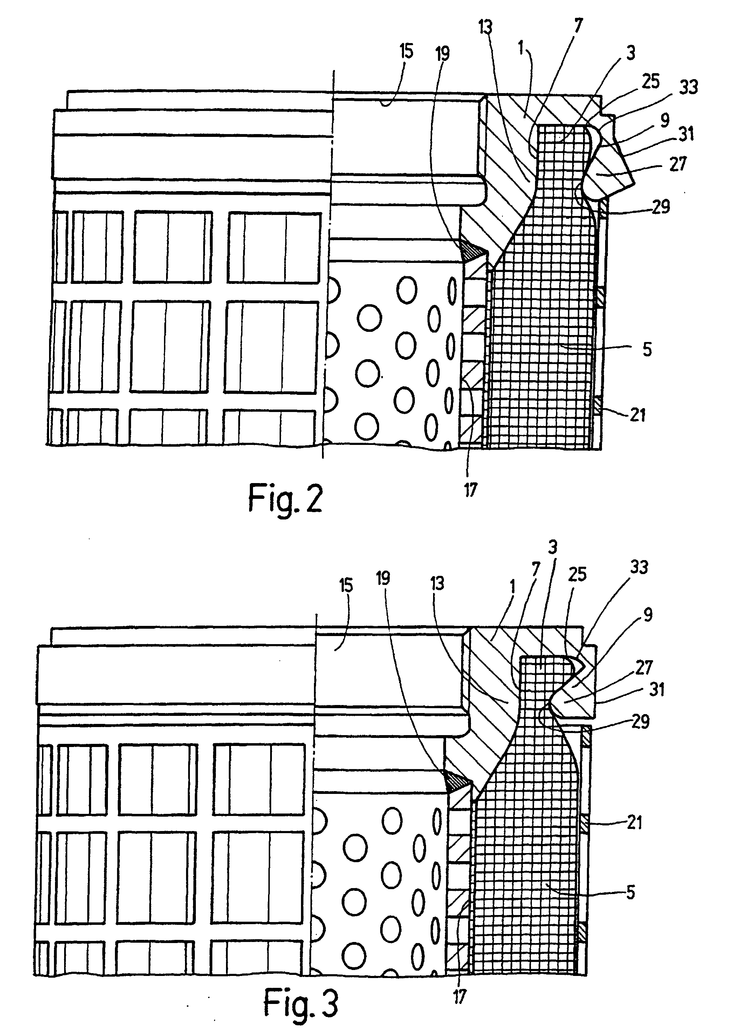

Fig. 2 und 3 zeigen den entsprechenden, kopfseitigen Bereich eines nach dem erfindungsgemäßen Verfahren hergestellten Filterelementes, wobei in Fig. 2 der Zustand vor dem endgültigen Herstellen der Dichtverbindung zwischen Kopfstück 1 und Rand 3 der Filtermatte 5 durch Verpressen dargestellt ist. Wie aus den Fig. zu ersehen ist, ist bei dem erfindungsgemäß hergestellten Filterelement die dem äußeren Umfang benachbarte Begrenzungswand 9 der Ringnut 7 im Kopfstück 1 in einem Abstand vom Nutgrund 25 mit einer Verdickung 27 versehen, die so geformt ist, daß sie mit ihrer gewölbten Innenseite 29 am Rand 3 der Filtermatte 5 anliegt und mit ihrer Außenseite 31 in unverformtem Zustand, d.h. vor dem Verpressen (wie in Fig. 2 dargestellt) am Kopfstück 1 einen Bereich vergrößerten Durchmessers bildet. Durch die Wölbung der Innenseite 29 nach einwärts hat die Ringnut 7 im Bereich ihres Nutgrundes 25 eine größere lichte Weite als im anschließenden Bereich.

Fig. 3 zeigt den Zustand nach Durchführen des Verpressens, wobei der Rand 3 der Filtermatte 5 zwischen der gewölbten Innenseite 29 und der gegenüberliegenden Wand 13 der Ringnut 7 zur Bildung der Dichtverbindung zusammengedrückt ist. Wie aus Fig. 3 zu ersehen ist, wirkt der unverdickte Bereich 33, über den die Verdickung 27 der Wand 9 mit dem Nutgrund 25 in Verbindung ist, als eine Art Biegegelenk beim Vorgang des Verpressens.

Eine besonders gute Abdichtung wird beim Verpressen erzielt, wenn die der Verdickung 27 gegenüberliegende Wand 13 der Ringnut 7 eine (in der Zeichnung nicht dargestellte) gegen die gewölbte Innenseite 29 der Verdickung 27 vorspringende, rippenartige Auswölbung aufweist, die mit der Innenseite 29 einen Quetschspalt erhöhter Flächenpressung bildet.

Fig. 3 zeigt die Außenseite 31 der Verdickung 27 nach dem Verpressen in im wesentlichen fluchtender Lagebeziehung zur Außenseite des Schutzkorbes 21. Ein nach dem Verpressen möglicherweise vorhandener Überstand der Außenseite 31 über einen gewünschten Solldurchmesser, oder an der Außenseite 31 durch die Einwirkung von Drückwerkzeugen beim Verpressen ausgebildete Druckmarken, lassen sich nach dem Verpressen durch mechanische Bearbeitung, wie Überdrehen des Kopfstückes 1, beseitigen. Wie zu ersehen ist, vermeidet das erfindungsgemäße Verfahren die Ausbildung einer umfänglichen Einschnürung im Verbindungsbereich zwischen Kopfstück 1 und Filtermatte 5 und damit das Entstehen eines Totraumes, der zu einer Ansammlung stagnierenden Fluidmediums führen könnte.

## Patentansprüche

1. Verfahren zum Herstellen einer Dichtverbindung zwischen der Filtermatte (5) eines rohrförmigen Filterelementes und einem diese endseitig einfassenden Kopfstück (1), bei dem in diesem eine den Rand (3) der Filtermatte (5) aufnehmende Ringnut (7) ausgebildet und deren dem Umfang benachbarte Wand zur Verringerung der lichten Weite der Ringnut (7) durch Aufbringen von radial nach innen gerichteter Druckkraft vom Umfang des Kopfstückes (1) her nach innen verpreßt wird, wobei die dem Umfang benachbarte Wand (9) der Ringnut (7) mit einer Verdikkung (27) versehen wird und wobei die Druckkraft zum Verpressen im Bereich dieser Verdickung (27) aufgebracht wird, **dadurch gekennzeichnet, daß**
a) ein metallisches Kopfstück (1) verwendet wird,
b) durch die Verdickung (27) eine Vergrößerung des Durchmessers des Kopfstückes (1) erhalten wird,
c) das Verpressen derart durchgeführt wird, daß eine umfängliche Einschnürung im Verbindungsbereich zwischen dem Kopfstück (1) und der Filtermatte (5) vermieden wird, und
d) durch das Verpressen eine Verpressung der Filtermatte (5) bewirkt wird.

2. Verfahren nach Anspruch 1, **dadurch gekennzeichnet, daß** die umfängliche Außenseite (31) der Verdickung (27) nach dem Verpressen durch mechanisches Bearbeiten auf den Solldurchmesser des Kopfstückes (1) abgetragen wird.

3. Verfahren nach Anspruch 2, **dadurch gekennzeichnet, daß** das Abtragen der Verdickung (27) durch Überdrehen durchgeführt wird.

4. Verfahren nach einem der Ansprüche 1 bis 3, **dadurch gekennzeichnet, daß** das Kopfstück (1) mit einer solchen Ringnut (7) versehen wird, die am Nutgrund (25) eine größere lichte Weite als im vom Nutgrund (25) entfernten Bereich besitzt, und daß die Verdickung (27) in einem Abstand vom Nutgrund (25) ausgebildet wird.

5. Verfahren nach Anspruch 4, **dadurch gekennzeichnet, daß** der der Verdikkung (27) gegenüberliegende Bereich der radial innenliegenden Wand (13) der Ringnut (7) eine gegen die Verdickung (27) hin radial vorspringende, rippenartige Auswölbung aufweist.

6. Verfahren nach einem der Ansprüche 1 bis 5, **dadurch gekennzeichnet, daß** das Kopfstück (1) aus Edelstahl hergestellt wird und daß eine Filtermatte (5) aus Edelstahl verwendet wird.

## Claims

1. Method for producing a sealing connection between a filter mat (5) of a tubular filter element and a head piece (1) enclosing the said filter element at one end, the said head piece having an annular groove (7) accommodating the edge (3) of the filter mat (5), the wall of the annular groove adjacent to the periphery being compressed by applying a force directed radially towards the interior from the periphery of the head piece (1) to the inside, in order to reduce the inside width of the annular groove (7), whereby the wall (9) of the annular groove (7) adjacent to the periphery is provided with an enlargement (27), the pressure force for compressing the wall being applied in the area of the said enlargement (27), **characterised in that**
a) a metallic head piece (1) is used,
b) the enlargement (27) enlarges the diameter of the head piece (1),
c) the compression is carried out in such a way that a contraction of the periphery in the area of the connection between the head piece (1) and the filter mat (5) is avoided and
d) the compression compresses the filter mat (5).

2. Method according to claim 1, **characterised in that** the peripheral outer side (31) of the enlargement (27) is reduced to the nominal diameter of the head piece (1) by machining after compression.

3. Method according to claim 2, **characterised in that** the enlargement (27) is removed by turning.

4. Method according to one of the claims 1 to 3, **characterised in that** the head piece (1) is provided with annular groove (7) which has a greater inside width at the bottom of the groove (25) than in the area away from the bottom of the groove (25) and that the enlargement (27) is formed at a distance from the bottom of the groove (25).

5. Method according to claim 4, **characterised in that** the area of the radially inward wall (13) of the annular groove (7) opposite to the enlargement (27) has a rib-like curvature radially protruding towards the enlargement (27).

6. Method according to one of the claims 1 to 5, **characterised in that** the head piece (1) is made of stainless steel and that a filter mat (5) of stainless steel is used.

## Revendications

1. Procédé destiné à réaliser un assemblage étanche entre un treillis de filtrage (5) d'un élément de filtrage tubulaire et une tête (1), qui enserre l'extrémité de celui-ci et dans laquelle tête est réalisée une rainure annulaire (7), qui est destinée à recevoir le bord (3) du treillis de filtrage (5) et dont la paroi voisine de la périphérie, en vue de réduire la largeur intérieure de la rainure annulaire (7), est comprimée vers l'intérieur à partir de la périphérie de la tête (1) sous l'effet d'une force de pression appliquée radialement vers l'intérieur, sachant que la paroi (9) de la rainure annulaire (7), voisine de la périphérie, est munie d'un renflement (27) et que la force de pression engendrant la compression est appliquée dans la zone de ce renflement (27), **caractérisé en ce que**
a) la tête (1) utilisée est une pièce métallique,
b) le renflement (27) entraîne un agrandissement du diamètre de la tête (1),
c) la compression est effectuée de manière à éviter une striction périphérique dans la zone d'assemblage entre la tête (1) et le treillis de filtrage (5), et
d) le processus de compression provoque une compression du treillis de filtrage (5).

2. Procédé selon la revendication 1, **caractérisé en ce que** la face extérieure (31) périphérique du renflement (27), après le processus de compression, est érodée par un usinage mécanique jusqu'à atteindre le diamètre théorique de la tête (1).

3. Procédé selon la revendication 2, **caractérisé en ce que** l'érosion du renflement (27) est effectuée par une finition au tour.

4. Procédé selon une des revendications 1 à 3, **caractérisé en ce que** la tête (1) est munie d'une rainure annulaire (7) dont le fond (25) possède une largeur intérieure supérieure à celle de la partie éloignée du fond de rainure (25), et **en ce que** le renflement (27) est réalisé à une distance donnée du fond de rainure (25).

5. Procédé selon la revendication 4, **caractérisé en ce que** la zone, en face du renflement (27), dans la paroi (13) radialement intérieure de la rainure annulaire (7) comporte une cambrure en forme de nervure, s'avançant radialement vers le renflement (27).

6. Procédé selon une des revendications 1 à 5, **caractérisé en ce que** la tête (1) est réalisée en acier fin et spécial et **en ce qu'**on utilise un treillis de filtrage (5) en acier fin et spécial.
